# EUROPÄISCHE PATENTSCHRIFT

(11) **EP 2 921 818 B1**
(45) Veröffentlichungstag und Bekanntmachung des Hinweises auf die Patenterteilung: **24.10.2018**
(21) Anmeldenummer: 15153554.9
(22) Anmeldetag: 03.02.2015
(51) Int. Cl.: G01B 11/27, F01D 21/00

(54) **Verfahren und Vorrichtung zum Ermitteln des Abstands eines Lichtstrahls von einem Punkt auf einer Körperoberfläche mittels eines Lichtsensors**
Method and device for determining the distance of a light beam from a point on the surface of a body by means of a light sensor
Procédé et dispositif de détermination de la distance d'un rayon lumineux à partir d'un point sur une surface de corps au moyen d'un capteur photosensible

(30) Priorität: 17.03.2014 DE 102014204917
(43) Veröffentlichungstag der Anmeldung: 23.09.2015
(73) Patentinhaber: Prüftechnik Dieter Busch AG, 85737 Ismaning (DE)
(72) Erfinder: Zöcke, Christine, 85521 Riemerling (DE); Meunier, Nicolas, 10247 Berlin (DE); Brunn, Dietrich, 85774 Unterföhring (DE)

(56) Entgegenhaltungen:
- EP-A1- 2 559 967
- FR-A1- 2 878 951
- JP-A- H0 798 211
- US-A- 5 717 491
- US-A1- 2008 015 811

## Beschreibung

### Hintergrund der Erfindung

Die vorliegende Erfindung betrifft ein Verfahren und eine Vorrichtung zum Ermitteln des Abstands eines Lichtstrahls von einem Punkt auf einer Körperoberfläche mittels eines Lichtsensors mit einem ebenen Messfeld.

Derartige Verfahren und Vorrichtungen kommen insbesondere bei der Ausrichtung von Körpern zueinander zum Einsatz. So ist es z.B. bekannt voneinander beabstandete zylindrische Lagerflächen von zwei Turbinenrotorlagern und Verwendung eines Lichtstrahls in Verbindung mit einem Lichtsensor derart auszurichten, dass ihre Krümmungsmittellinien bzw. Krümmungsmittelachsen untereinander bzw. miteinander fluchten. Hierfür wird die Krümmungsmittellinie der Lagerfläche eines der beiden Turbinenrotorlager mit dem Lichtstrahl, der in der Regel ein Laserstrahl ist, in Deckung gebracht. Von dem somit als Referenzachse dienenden Laserstrahl werden dann die Abstände von ausgewählten Punkten auf der Lagerfläche des anderen Turbinenrotorlagers ermittelt, und zwar indem das ebene Messfeld des Sensors mit dem Laserstrahl bestrahlt wird, so dass auf der Grundlage von erfassten Lagen des Lichtflecks des Laserstrahls auf dem Messfeld die Abstände bestimmt werden können. Auf der Grundlage der Abstände wiederum kann dann ermittelt werden, in welche Position das zweite Turbinenrotorlager gebracht werden muss, damit die Krümmungsmittelinien bzw. Krümmungsmittelachsen der Lagerflächen miteinander fluchten.

Verfahren und Vorrichtungen zum Ermitteln von Abständen von Punkten bzw. Körperoberflächen von einem Lichtstrahl sind z.B. aus der US 5,717,491, der US 5,576,826, der US 7,403,294 B2, der US 7,486,390 B2, der US 8,037,615, der DE 10 2004 020 406 A1, der EP 0 543 971 B1, der JP10213416 A und der US 2005/0068521 A1 bekannt. Aus der DE 20 2004 002 121 U1 ist eine Messvorrichtung bekannt, die einen Messtaster zur Vermessung einer Körperoberfläche aufweist.

Bei dem oben dargelegten Verfahren zum Ausrichten von Körpern wird das Messfeld zum Erzielen einer möglichst genauen Abstandsmessung rechtwinkelig bzw. im wesentlichen rechtwinkelig zu dem Lichtstrahl ausgerichtet, da das Messfeld in dieser Stellung mit der höchsten Genauigkeit arbeitet. Die rechtwinkelige Ausrichtung des Messfelds wird meist unter Zuhilfenahme weiterer Messmittel, wie z.B. einem weiteren Messfeld oder einem Positionsdetektor vorgenommen, wobei die Ausrichtung des Messfelds bei einer Vermessung einer Vielzahl von Punkten auf der jeweiligen Körperoberfläche meist oftmals vorgenommen werden muss. Bei den bekannten Lösungen ist daher die rechtwinkelige Ausrichtung des Messfelds mit einem großen Aufwand verbunden, was wiederum den Aufwand zur Ermittlung bzw. Messung des Abstands erhöht.

### Zugrundeliegende Aufgabe

Es ist Aufgabe der Erfindung, den Aufwand zum Ermitteln des Abstands eines Lichtstrahls von einem Punkt auf einer Körperoberfläche zu reduzieren.

Diese Aufgabe wird erfindungsgemäß mit einem Verfahren mit den Merkmalen des Anspruchs 1 und mit einer Vorrichtung mit den Merkmalen des Anspruchs 2 gelöst.

Das Verfahren umfasst die folgenden Schritte:
(A) Positionieren des Messfelds derart, dass der Lichtstrahl auf das Messfeld auftrifft,
(B) Verschwenken des Messfelds um eine erste Schwenkachse, die parallel zum Lichtstrahl verläuft und von diesem beabstandet ist, und Verschwenken des Messfelds um wenigstens eine zweite Schwenkachse während das Messfeld um die erste Schwenkachse verschwenkt wird, wobei die zweite Schwenkachse windschief zu dem Lichtstrahl verläuft, wobei das Messfeld bei dem Verschwenken um einen gemeinsamen Schnittpunkt der zweiten Schwenkachse und der ersten Schwenkachse verschwenkt wird, der eine vordefinierte relative Lage zu dem Punkt auf der Körperoberfläche aufweist, und wobei bei dem Verschwenken um die zweite Schwenkachse eine Schwenkstellung wenigstens dreimal durchlaufen wird, in welcher der Lichtstrahl rechtwinkelig zu dem Messfeld orientiert ist,
(C) Erfassen der Lagen des Lichtflecks des Lichtstrahls auf dem Messfeld durch den Lichtsensor, welche der Lichtfleck während des Verschwenkens gemäß Schritt B auf dem Messfeld einnimmt,
(D) Ermitteln derjenigen Lagen von den in Schritt C erfassten Lagen, welche auf dem Messfeld einen Kreisbogen mit einem Abstand zu dem Schnittpunkt beschreiben, der kleiner ist als der Abstand der übrigen in Schritt (C) erfassten Lagen zu dem Schnittpunkt, und
(E) Bestimmen des Abstands des Lichtstrahls von dem Punkt auf der Körperoberfläche auf der Grundlage des Verlaufs des Kreisbogens gemäß Schritt D und der vordefinierten relativen Lage zu dem Punkt auf der Körperoberfläche.

Durch das gleichzeitige Verschwenken um die erste und die zweite Schwenkachse, deren Lage oben definiert ist, kann vorteilhaft eine genaue Ermittlung des Abstands zu dem jeweiligen Punkt auf der Körperoberfläche vorgenommen werden, und zwar ohne dass hierfür eine aufwendige rechtwinkelige Ausrichtung des Messfelds, wie sie von bekannten Lösungen bekannt ist, vorgenommen werden muss, wie nachfolgend dargelegt.

Dadurch, dass bei dem Verschwenken um die zweite Schwenkachse in Schritt B eine Schwenkstellung wenigstens dreimal durchlaufen wird, in welcher der Lichtstrahl rechtwinkelig zu dem Messfeld orientiert ist, wird diese rechtwinkelige Schwenkstellung in Schritt C bei dem Erfassen der Lagen des Lichtflecks mit berücksichtigt. Da sich diese rechtwinkelige Schwenkstellung wiederum dadurch auszeichnet, dass der Lichtfleck des Lichtstrahls - der insbesondere ein Laserstrahl sein kann - in der rechtwinkeligen Schwenkstellung auf dem Messfeld eine Lage einnimmt, in welcher im Vergleich zu den Lagen in anderen Schwenkstellungen um die zweite, zu dem Lichtstrahl windschiefe Achse der kleinste Abstand zu dem als Schwenkpunkt dienenden Schnittpunkt vorliegt (wie aus einfachen geometrischen Betrachtungen unmittelbar ersichtlich), kann die rechtwinkelige Schwenkstellung aus allen in Schritt C erfassten Lagen eindeutig ermittelt werden. Ferner, da neben dem Verschwenken um die zweite Schwenkachse zeitgleich auch um die erste Schwenkachse verschwenkt wird, die parallel zum Lichtstrahl verläuft und von diesem beabstandet ist, sind gemäß Schritt D dann lediglich diejenigen Lagen von den in Schritt C erfassten Lagen zu ermitteln, welche auf dem Messfeld einen Kreisbogen mit einem Abstand zu dem Schnittpunkt beschreiben, der kleiner ist als der Abstand der übrigen in Schritt C erfassten Lagen zu dem Schnittpunkt. Der Kreisbogen ist dabei diejenige Kurve, die von dem Lichtfleck bei dem Verschwenken um die erste Schwenkachse beschrieben wird, wenn sich das Messfeld in der rechtwinkeligen Schwenkstellung befindet. Damit in dieser rechtwinkeligen Schwenkstellung ein Kreisbogen von den erfassten Lagen beschreibbar bzw. festlegbar bzw. definierbar ist, ist erfindungsgemäß vorgesehen, dass die rechtwinkelige Schwenkstellung - also die Stellung, in welcher der Lichtstrahl rechtwinkelig zu dem Messfeld orientiert ist - wenigstens dreimal durchlaufen wird, da ein Kreis bzw. ein Kreisbogen durch wenigstens drei auf ihm liegende Punkte bzw. Lagen eindeutig bestimmt ist. Um den Verlauf des Kreisbogens möglichst präzise auszubilden, wird die rechtwinkelige Schwenkstellung wenigstens fünfmal oder zehnmal oder mehr als zehnmal durchlaufen. Gemäß Schritt E kann dann, wenn der obige Kreisbogen ermittelt bzw. ausfindig gemacht wurde, der Abstand des Lichtstrahls von dem Punkt auf der Körperoberfläche auf der Grundlage des Verlaufs des Kreisbogens und der vordefinierten relativen Lage zu dem Punkt auf der Körperoberfläche bzw. auf der Grundlage eines vordefinierten Abstands zu dem Punkt auf der Körperoberfläche bestimmt werden. Insbesondere kann hierzu z.B. der Abstand des Kreisbogens von dem als Schwenkpunkt dienenden Schnittpunkt der zweiten Schwenkachse mit der ersten Schwenkachse einfach dadurch ermittelt werden, dass der Radius des Kreises des Kreisbogens berechnet wird, da der Radius diesem Abstand entspricht. Schließlich kann dann der Abstand des Lichtstrahls von dem Punkt auf der Körperoberfläche unter Verwendung der vordefinierten bzw. bekannten relativen Lage des Schnittpunkts zu dem Punkt auf der Körperoberfläche bzw. auf der Grundlage eines vordefinierten Abstands zu diesem Punkt berechnet werden. Da hierbei die Lagen des Lichtflecks in der rechtwinkeligen Schwenkstellung bei der Abstandsberechnung zugrundgelegt werden, weist die Abstandsmessung eine hohe Genauigkeit auf, ohne hierfür ein aufwendiges Ausrichten des Messfelds zeitlich vorschalten zu müssen, wie es bei bekannten Lösungen der Fall ist.

Insgesamt betrachtet kann daher der Aufwand zum Ermitteln des Abstands eines Lichtstrahls von einem Punkt auf einer Körperoberfläche reduziert werden, da ein aufwendiges Ausrichten des ebenen Messfelds in die rechtwinkelige Stellung relativ zu dem Lichtstrahl entfallen kann. Bei dem erfindungsgemäßen Verfahren ist lediglich unter anderem zu gewährleisten, dass die rechtwinkelige Schwenkstellung des Messfelds beim Verschwenken um die zweite, zu dem Lichtstrahl windschiefe Schwenkachse wenigstens dreimal durchlaufen wird.

Die zu dem Lichtstrahl windschiefe zweite Schwenkachse kann insbesondere z.B. rechtwinkelig zum Laserstrahl und rechtwinkelig zu der ersten Schwenkachse orientiert sein bzw. z.B. rechtwinkelig zum Laserstrahl und rechtwinkelig zu der ersten Schwenkachse verlaufen.

Die Schritte A bis E werden aufeinanderfolgend durchgeführt, also Schritt B nach Schritt A, Schritt C nach Schritt B, Schritt D nach Schritt C und Schritt E nach Schritt D.

Es versteht sich, dass die vordefinierte relative Lage des Schnittpunkts zu dem Punkt auf der Körperoberfläche nicht nur ein Auseinanderfallen des Schnittpunkts mit dem Punkt auf der Körperoberfläche (also ein Beabstanden der beiden Punkte) sondern insbesondere auch das Zusammenfallen des Schnittpunkts mit dem Punkt auf der Körperoberfläche umfassen kann.

Bei dem Lichtsensor bzw. dem Sensor kann es sich um eine beliebigen mit einem ebenen Messfeld versehenen Sensor handeln. Besonders bevorzugt handelt es sich um einen Sensor, der eine Mehrzahl von Zeilensensoren zur Ausbildung des Messfelds aufweist.

Die erfindungsgemäße Vorrichtung nach Anspruch 2 eignet sich insbesondere zur Durchführung des obigen Verfahrens und zeichnet sich dadurch aus, dass das Messfeld um einen gemeinsamen Schnittpunkt einer ersten Schwenkachse und wenigstens einer zweiten Schwenkachse verschwenkbar ist, so dass das Messfeld während des Verschwenkens um die erste Schwenkachse auch um die zweite Schwenkachse verschwenkbar ist, wobei die erste Schwenkachse parallel zum Lichtstrahl verläuft und von diesem beabstandet ist, und wobei die zweite Schwenkachse eine zu dem Lichtstrahl windschiefe Schwenkachse ist, wobei der Schnittpunkt eine vordefinierte relative Lage zu dem Punkt auf der Körperoberfläche aufweist, und wobei das Messfeld derart um die zweite Schwenkachse verschwenkbar ist, dass eine rechtwinkelige Schwenkstellung durchlaufen werden kann, in welcher der Lichtstrahl rechtwinkelig zu dem Messfeld orientiert ist.

Durch die vorgesehene Verschwenkbarkeit um die zweite Schwenkachse und die erste Schwenkachse über den als Schwenkpunkt dienenden Schnittpunkt kann mittels der Vorrichtung aus den bereits oben dargelegten Gründen der Aufwand zum Ermitteln bzw. Messen des Abstands eines Lichtstrahls von einem Punkt auf einer Körperoberfläche reduziert werden. Vor dem Erfassen und Ermitteln der Lagen des Lichtflecks und dem Bestimmen des jeweiligen Abstands ist das Messfeld mittels der Vorrichtung lediglich in der beschriebenen Weise zu verschwenken. Ein aufwendiges Ausrichten des Messfelds zum Einnehmen der rechtwinkeligen Stellung relativ zu dem Laserstrahl kann vorteilhaft entfallen.

Bei einer praktischen Ausführungsform ist das Messfeld an einem Abstandshalter der Vorrichtung angebracht, der dafür vorgesehen ist, das Messfeld von dem Punkt auf der Körperoberfläche zu beabstanden. Mittels des Abstandshalters kann die Bestimmung des Abstands von dem jeweiligen Punkt auf der Körperoberfläche durch Verschwenken um die erste und zweite Schwenkachse sehr betriebssicher durchgeführt werden.

Bevorzugt ist an einem Ende des Abstandshalters eine Kugel angebracht, die zur Herstellung eines Kontakts mit dem Punkt auf der Körperoberfläche über die Kugelfläche der Kugel vorgesehen ist, und wobei das Messfeld unter Beibehaltung des Kontakts der Kugel mit dem Punkt auf der Körperoberfläche um das mit dem Schnittpunkt zusammenfallende Zentrum der Kugel verschwenkbar ist. Durch Vorsehen der Kugel kann das zum Ermitteln bzw. Messen des Abstands vorzunehmende Verschwenken um die erste und zweite Schwenkachse auf einfache und praktische Weise durchgeführt werden, wobei die Kugel hierfür mit dem jeweiligen Punkt auf der Körperoberfläche in Kontakt zu bringen ist. Insbesondere kann durch Vorsehen der Kugel ein betriebssicheres manuelles Verschwenken des Messfelds realisiert werden. Bei Vorsehen der Kugel fällt das Zentrum derselben mit dem Schnittpunkt der Schwenkachsen zusammen, so dass der jeweilige Punkt auf der Körperoberfläche von dem Schnittpunkt der Schwenkachsen beabstandet ist. Die Kugel kann bevorzugt aus einem metallischen Material bestehen, einhergehend mit einer hohen Festigkeit, die wiederum auch vorteilhaft ein präzises Verschwenken begünstigt.

Um eine sehr betriebssichere und mithin auch genaue Abstandsermittlung zu realisieren, weist die Vorrichtung vorzugsweise eine Halteeinrichtung zum ortsfesten Halten des Abstandshalters an der Körperoberfläche auf.

Besonders vorteilhaft ist die Halteeinrichtung zum Halten derselben an einem wenigstens bereichsweise magnetisch ausgebildeten Oberflächenbereich der Körperoberfläche wenigstens bereichsweise magnetisch ausgebildet. So kann auf einfache und praktische Weise, insbesondere ohne Vorsehen aufwendiger Haltemittel, ein Halten des Abstandshalters an der Körperoberfläche durch Magnetkraft realisiert werden.

Bei einer praktischen Ausführungsform ist die Kugel drehbar in einer Aufnahme der Halteeinrichtung aufgenommen, wodurch der Vorteil der einfachen Verschwenkbarkeit über die Kugel kombiniert werden kann mit dem Vorteil der über die Halteeinrichtung bereitgestellten betriebssicheren und mithin genauen Abstandsermittlung.

Bei einer weiteren praktischen Ausführungsform weist die Vorrichtung ein Inklinometer zum zusätzlichen Bestimmen der Neigung des Abstands relativ zur Schwerkraftrichtung auf. Durch das Vorsehen des Inklinometers eignet sich die Vorrichtung besonders vorteilhaft zum relativen Ausrichten von gekrümmten Körperoberflächen zueinander, also wenn man z.B. vor die Aufgabe gestellt wird, voneinander beabstandete zylindrische Lagerflächen von zwei Turbinenrotorlagern derart auszurichten, dass ihre Krümmungsmittelinien bzw. Krümmungsmittelachsen untereinander bzw. miteinander fluchten. Hierfür sind auch Informationen über die Richtung des jeweils zu ermittelnden Abstands relativ zur Schwerkraftrichtung erforderlich, um die Lage der Krümmungsmittelachse zu ermitteln. Das Inklinometer misst hierbei die Neigung der Vorrichtung relativ zu der Schwerkraftrichtung, die der Richtung bzw. Neigung des jeweils zu ermittelnden Abstands relativ zur Schwerkraftrichtung entspricht bzw. aus welcher die Richtung bzw. Neigung des jeweils zu ermittelnden Abstands relativ zur Schwerkraftrichtung ermittelbar ist.

Die erfindungsgemäße Vorrichtung nach Anspruch 2 ist dazu eingerichtet, bei Verschwenken des Messfeldes um die erste Schwenkachse und die zweite Schwenkachse von den erfassten Lagen diejenigen Lagen automatisch zu ermitteln, welche auf dem Messfeld einen Kreisbogen mit einem Abstand zu dem Schnittpunkt beschreiben, der kleiner ist als der Abstand der übrigen erfassten Lagen zu dem Schnittpunkt. So kann dem Anwender unmittelbar nach dem Verschwenken um die erste Schwenkachse und die zweite Schwenkachse der für die jeweilige Messung relevante Kreisbogen bzw. die entsprechenden Lichtfleck-Lagen zur Verfügung gestellt werden, um den Kreisbogen bzw. die Lichtfleck-Lagen z.B. für eine weitere Auswertung einzusetzen.

Die erfindungsgemäße Vorrichtung nach Anspruch 2 ist ferner dazu eingerichtet, den Abstand des Lichtstrahls von dem Punkt auf der Körperoberfläche auf der Grundlage des Verlaufs des Kreisbogens und der vordefinierten relativen Lage des Schnittpunkts zu dem Punkt auf der Körperoberfläche automatisch zu bestimmen, so dass der Anwender lediglich die erforderliche Schwenkbewegung durchführen muss und ihm hiernach der erwünschte Abstandswert z.B. über eine Schnittstelle der Vorrichtung vorteilhaft übermittelt werden kann. Insbesondere ist es denkbar, dass der Abstandswert dem Anwender drahtlos z.B. auf sein Laptop oder sein Tablet übertragen wird.

### Kurzbeschreibung der Zeichnung

Nachfolgend werden Ausführungsbeispiele der Erfindung anhand der beigefügten Zeichnung näher erläutert. In der Zeichnung zeigen:
- Fig. 1A und 1B: jeweils eine schematische Darstellung eines ersten Ausführungsbeispiels einer erfindungsgemäßen Vorrichtung,
- Fig. 2: eine schematische Darstellung eines zweiten Ausführungsbeispiels einer erfindungsgemäßen Vorrichtung, zusammen mit zwei Turbinenrotorlagern,
- Fig. 3A bis 3F: jeweils schematische Darstellungen eines dritten Ausführungsbeispiels einer erfindungsgemäßen Vorrichtung,
- Fig. 4A bis 4Cjeweils: schematische Darstellungen eines vierten Ausführungsbeispiels einer erfindungsgemäßen Vorrichtung,
- Fig. 4D bis 4F: jeweils schematische Darstellungen eines fünften Ausführungsbeispiels einer erfindungsgemäßen Vorrichtung,
- Fig. 5A bis 5Djeweils: schematische Darstellungen eines sechsten Ausführungsbeispiels einer erfindungsgemäßen Vorrichtung,
- Fig. 6A bis 6Djeweils: Darstellungen zur Veranschaulichung von erfassten Lagen eines Lichtflecks eines Laserstrahls auf einem Messfeld,
- Fig. 7: eine schematische Darstellung zur Veranschaulichung des Verlaufs von Lichtfleck-Lagen, die einen Kreisbogen auf einem Messfeld beschreiben,
- Fig. 8A und 8B: jeweils weitere Darstellungen zur Veranschaulichung von erfassten Lagen eines Lichtflecks eines Laserstrahls auf einem Messfeld, und
- Fig. 9: eine schematische Darstellung zur Veranschaulichung eines Verfahrens zur Ermittlung der Krümmungsmittelachse der Lagerfläche eines Turbinenrotorlagers.

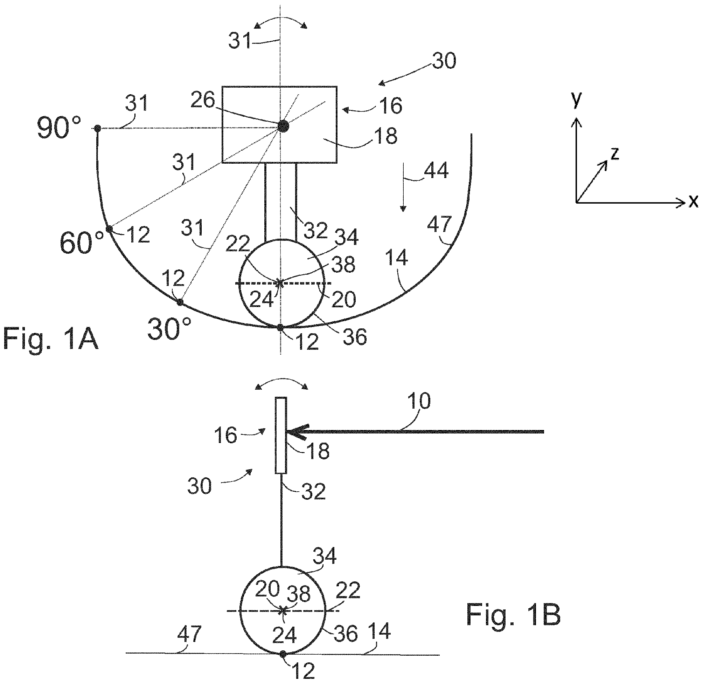

Die Fig.1A zeigt eine sehr schematische Vorderansicht und die Fig. 1B zeigt eine sehr schematische Seitenansicht einer Vorrichtung 30 zum Ermitteln des Abstands eines Lichtstrahls 10 in Form eines Laserstrahls von einem Punkt 12 auf einer Körperoberfläche 14, bei der es sich, wie hier schematisch veranschaulicht, z.B. um eine zylindrische Lagerfläche 47 eines Turbinenrotorlagers handeln kann.

Die Vorrichtung 30 weist einen Lichtsensor 16 mit einem ebenen Messfeld 18 auf. Der Lichtsensor 16 ist dazu eingerichtet, die Lage eines Lichtflecks 26 des auf das Messfeld 18 auftreffenden Lichtstrahls 10 auf dem Messfeld 18 zu erfassen.

Das Messfeld 18 ist um einen gemeinsamen Schnittpunkt 24 einer ersten Schwenkachse 22 und einer zweiten Schwenkachse 20 verschwenkbar, so dass das Messfeld 18 während des Verschwenkens um die erste Schwenkachse 22 auch um die zweite Schwenkachse 20 verschwenkbar ist, wobei die erste Schwenkachse 22 parallel zum Lichtstrahl 10 verläuft und von diesem beabstandet ist, und wobei die zweite Schwenkachse 20 eine zu dem Lichtstrahl 10 windschiefe Schwenkachse 20 ist. In Fachkreisen wird die erste Schwenkachse 22 auch als Rollachse und die zweite Schwenkachse 20 auch als Nickachse bezeichnet.
Der gemeinsame Schnittpunkt 24 weist eine vordefinierte relative Lage bzw. einen vordefinierten Abstand zu dem Punkt 12 auf der Körperoberfläche 14 auf. Ferner ist das Messfeld 18 derart um die zweite Schwenkachse 20 verschwenkbar, dass eine rechtwinkelige Schwenkstellung durchlaufen werden kann, in welcher der Lichtstrahl 10 rechtwinkelig zu dem Messfeld 18 orientiert ist. Die rechtwinkelige Schwenkstellung des Messfelds 18, in welcher das Messfeld 18 mit der größten Genauigkeit arbeitet bzw. mit der größten Genauigkeit die Lagen des Lichtflecks erfasst, ist in Fig.1B veranschaulicht.

Das Messfeld 18 ist an einem Abstandshalter 32 der Vorrichtung 30 angebracht, der dafür vorgesehen ist, das Messfeld 18 von dem Punkt 12 auf der Körperoberfläche 14 zu beabstanden. Zur Realisierung der oben beschriebenen Verschwenkbarkeit um die erste Schwenkachse 22 und die zu dem Lichtstrahl 10 bzw. Laserstrahl 10 windschiefe zweite Schwenkachse 20 - die bei dem hier veranschaulichten Ausführungsbeispiel rechtwinkelig zum Laserstrahl 10 und rechtwinkelig zu der ersten Schwenkachse 22 orientiert ist - ist an einem Ende des Abstandshalters 32 eine Kugel 34 angebracht. Die Kugel 34 ist zur Herstellung eines Kontakts mit dem Punkt 12 auf der Körperoberfläche 14 über die Kugelfläche 36 der Kugel 34 vorgesehen. Das Messfeld 18 ist unter Beibehaltung des Kontakts der Kugel 34 mit dem Punkt 12 auf der Körperoberfläche 14 um das mit dem Schnittpunkt 24 zusammenfallende Zentrum 38 der Kugel 34 verschwenkbar.

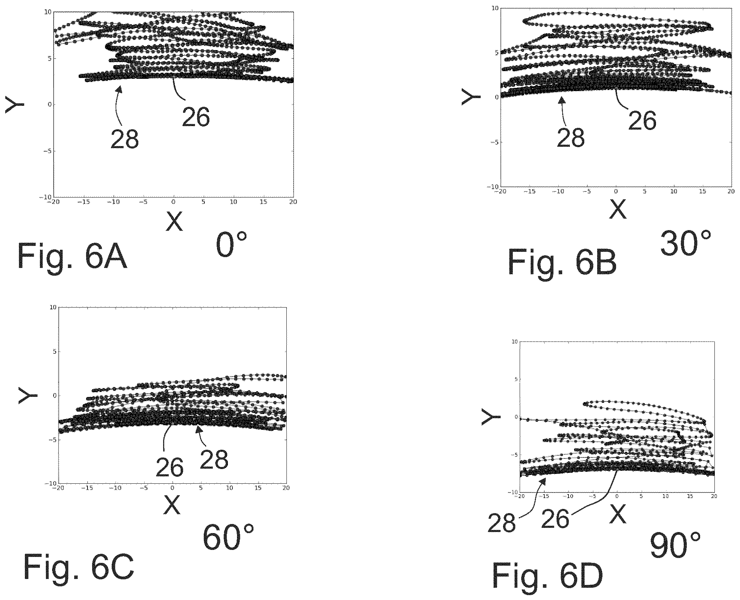

Ein Verfahren zum Ermitteln des Abstands des Lichtstrahls 10 von dem Punkt 12 auf der Körperoberfläche 14 unter Verwendung der Vorrichtung 30 umfasst die folgenden Schritte:
(A) Positionieren des Messfelds 18 derart, dass der Lichtstrahl 10 auf das Messfeld 18 auftrifft,
(B) Verschwenken des Messfelds 18 um die erste Schwenkachse 22, die parallel zum Lichtstrahl 10 verläuft und von diesem beabstandet ist, und Verschwenken des Messfelds um die zweite Schwenkachse 20 während das Messfeld um die erste Schwenkachse 22 verschwenkt wird, wobei die zweite Schwenkachse 20 windschief zu dem Lichtstrahl 10 verläuft, wobei das Messfeld 18 bei dem Verschwenken um den gemeinsamen Schnittpunkt 24 der zweiten Schwenkachse 20 und der ersten Schwenkachse 22 verschwenkt wird, der eine vordefinierte relative Lage zu dem Punkt 12 auf der Körperoberfläche 14 aufweist, und wobei bei dem Verschwenken um die zweite Schwenkachse 20 eine Schwenkstellung wenigstens dreimal durchlaufen wird, in welcher der Lichtstrahl 10 rechtwinkelig (vgl. Fig. 1B) zu dem Messfeld (18) orientiert ist,
(C) Erfassen der Lagen des Lichtflecks 26 des Lichtstrahls 10 auf dem Messfeld 18 durch den Lichtsensor 16, welche der Lichtfleck 26 während des Verschwenkens gemäß Schritt B auf dem Messfeld 18 einnimmt,
(D) Ermitteln derjenigen Lagen von den in Schritt C erfassten Lagen, welche auf dem Messfeld 18 einen Kreisbogen 28 mit einem Abstand zu dem Schnittpunkt 24 beschreiben, der kleiner ist als der Abstand der übrigen in Schritt C erfassten Lagen zu dem Schnittpunkt 24, und
(E) Bestimmen des Abstands des Lichtstrahls 10 von dem Punkt 12 auf der Körperoberfläche 14 auf der Grundlage des Verlaufs des Kreisbogens 28 gemäß Schritt D und der vordefinierten relativen Lage des gemeinsamen Schnittpunkts 24 im KugelZentrum 38 zu dem Punkt 12 auf der Körperoberfläche 14, wobei der Abstand des Lichtstrahls 10 von dem Schnittpunkt 24 dem Radius des Kreisbogens 28 entspricht, welcher sich in bekannter Weise einfach ermitteln bzw. in einem Koordinatensystem nach den Figuren 6A bis 6D als maximaler y-Wert bei x = 0 ablesen lässt.

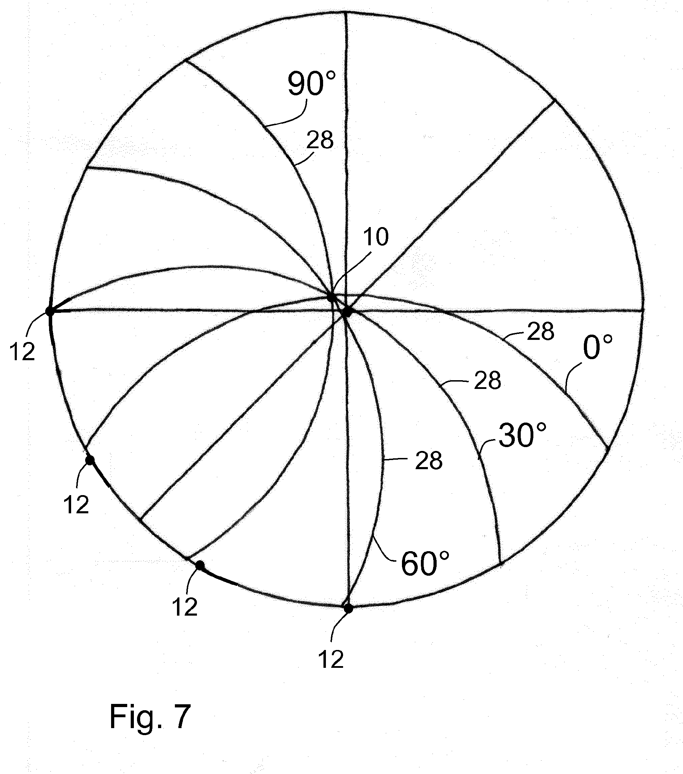

Die Fig. 6A bis D dienen der Veranschaulichung der sich bei dem Verschwenken in der gemäß Schritt B vorgesehenen Weise ergebenden Lagen des Lichtflecks 26 auf dem Messfeld 18. So ist z.B. der Fig. 6A zu entnehmen, dass bei einem Verschwenken in einer 0°-Ausrichtung (vgl. Fig.1 A), also in einer Ausrichtung der Vorrichtung 30, in welcher deren Längsachse 31 parallel zur Schwerkraftrichtung 44 ausgerichtet ist, der Lichtfleck 26 in der rechtwinkeligen Schwenkstellung einen Kreisbogen 28 beschreibt, dessen Abstand zu dem Schnittpunkt 24 kleiner ist als der Abstand der übrigen in Schritt C erfassten Lagen zu dem Schnittpunkt 24. Dies äußert sich in den Fig. 6A bis 6D auch jeweils dadurch, dass die Y-Koordinaten (vgl. auch Koordinatensystem des Messfelds in Fig. 1A) der Lagen des Lichtflecks 26 auf dem Kreisbogen 28 kleinere Werte annehmen als die übrigen Lichtfleck-Lagen. Diese für die rechtwinkelige Schwenkstellung des Messfelds 18 typische Eigenschaft liegt selbstverständlich auch dann vor, wenn in den übrigen Ausrichtungen der Vorrichtung verschwenkt wird, also wenn in der 30°-Ausrichtung, der 60°-Ausrichtung und der 90°-Ausrichtung verschwenkt wird, um den Abstand der für diese Ausrichtungen vorgesehenen Punkte 12 - vgl. auch Fig. 1A, wobei die 30°-Ausrichtung, die 60°-Ausrichtung und die 90°-Ausrichtung durch entsprechende Darstellung der Längsachse 31 veranschaulicht ist - zu dem Lichtstrahl 10 bzw. Laserstrahl 10 zu messen. Dass der Lichtstrahl 10 beim Verschwenken aus der rechtwinkeligen Schwenkstellung heraus nach "oben" wandert, also sich zu größeren Y-Werten hin bewegt, ergibt sich aus einfachen geometrischen Betrachtungen. Der Verlauf der Kreisbögen 28 für die jeweils unterschiedlichen Ausrichtungen der Vorrichtung 30 relativ zur Schwerkraftrichtung 44 ist schematisch auch in Fig. 7 veranschaulicht.

In den x-y-Diagrammen z.B. nach den Fig. 6A bis 6D kann der jeweils ermittelte Abstandswert, insbesondere für verschiedene Ausrichtungen der Vorrichtung, als digitaler Wert farbkodiert dargestellt werden.

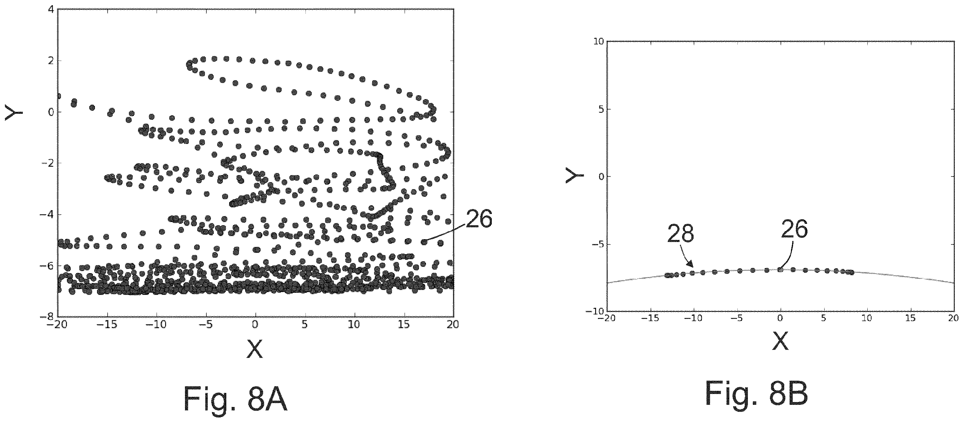

Um den jeweiligen Kreisbogen 28 in der rechtwinkeligen Schwenkstellung des Messfelds 18 von den übrigen Lagen des Lichtflecks 26 möglichst fehlerfrei zu extrahieren, kann man z.B. das Koordinatensystem in der Y-Richtung auseinanderstrecken, wie in Fig. 8A veranschaulicht. Fig. 8B veranschaulicht den Kreisbogen 28 nach dem Extrahieren und Entfernen der übrigen Lichtfleck-Lagen.

Die Einstellung der 30°-Ausrichtung und der 60°-Ausrichtung der Vorrichtung 30, also eine Ausrichtung, bei welcher die Längsachse 31 der Vorrichtung 30 um einen Winkel von 30°bzw. 60° bzw. 90° zur Schwerkraftrichtung 44 verdreht ist, wird unter Zuhilfenahme eines Inklinometers (nicht dargestellt) mit einer Genauigkeit von 0,5° Grad in x-Richtung und einer Genauigkeit von 0,1° in x-Richtung und y-Richtung (vgl. Fig. 1A) vorgenommen, das dafür vorgesehen ist, die Neigung der Vorrichtung 30 relativ zur Schwerkraftrichtung 44 zu messen und mithin auch die Neigung des jeweils zu ermittelnden Abstands relativ zur Schwerkraftrichtung 44 zu messen. Für die Einstellung der 90°-Ausrichtung kann ein Inklinometer bedingt durch das Messprinzip nicht verwendet werden, so dass hier eine grobe Einstellung der 90°-Ausrichtung ausreichen muss.

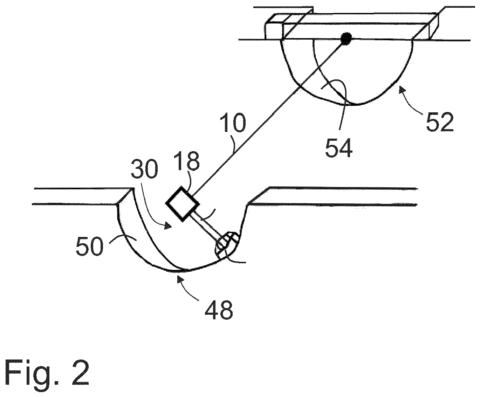

Durch die oben beschriebene Abstandsermittlung bzw. Abstandmessung von Punkten 12, den jeweils unterschiedliche Ausrichtungen relativ zur Scherkraftrichtung 44 zugeordnet sind, kann die räumliche Lage der Krümmungsmittellinie einer Lagerfläche eines Turbinenrotorlagers relativ zu dem Lichtstrahl bzw. Laserstrahl mittels einer Vorrichtung 30 (vgl. Fig. 2) ermittelt werden, um z.B. ein Turbinenlager 48 mit einer Lagerfläche 50 derart zu positionieren, dass es mit der Krümmungsmittellinie eines zweiten Turbinenlagers 52 mit einer Lagerfläche 54 fluchtet, wobei hierfür der Laserstrahl 10 als Referenz mit der Krümmungsmittellinie der Lagerfläche 54 des zweiten Turbinenlagers 52 deckungsgleich angeordnet wird.

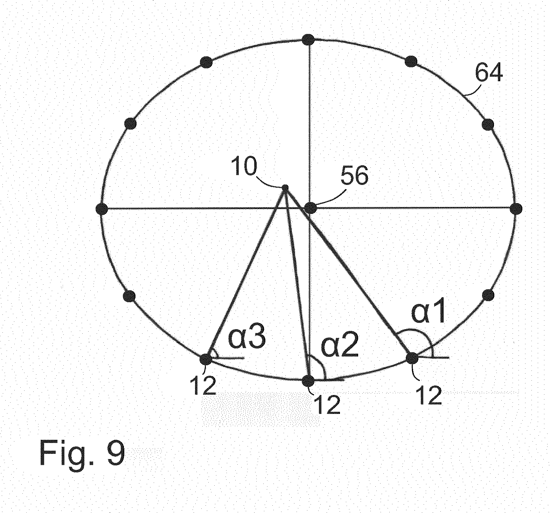

Zum Bestimmen der räumlichen Lage der Krümmungsmittellinie einer Lagerfläche eines Turbinenrotorlagers relativ zu dem Lichtstrahl bzw. Laserstrahl 10 kann ein Ellipsenfit verwendet werden, wie nachfolgend anhand der Fig. 9 veranschaulicht ist. Nachdem z.B. für drei oder auch mehr verschiedene Punkte 12 auf der Lagerfläche, die sich alle in derselben Schnittebene rechtwinkelig zur Krümmungsmittelachse befinden, und denen jeweils eine Ausrichtung α1 bis α3 zugeordnet ist, der Abstand (vgl. entsprechende Abstandsgeraden in Fig.9) in der oben beschriebenen Weise, auch unter Verwendung der Länge des Abstandshalters 32, ermittelt wurde, kann durch die Punkte12 auf der Lagerfläche ein Ellipsenfit 64 gelegt werden. Das Zentrum des Ellipsenfits 64 ist dann eine sehr gute Annäherung an die wirkliche Lage der Krümmungsmittelache 56 relativ zu dem Laserstrahl 10.

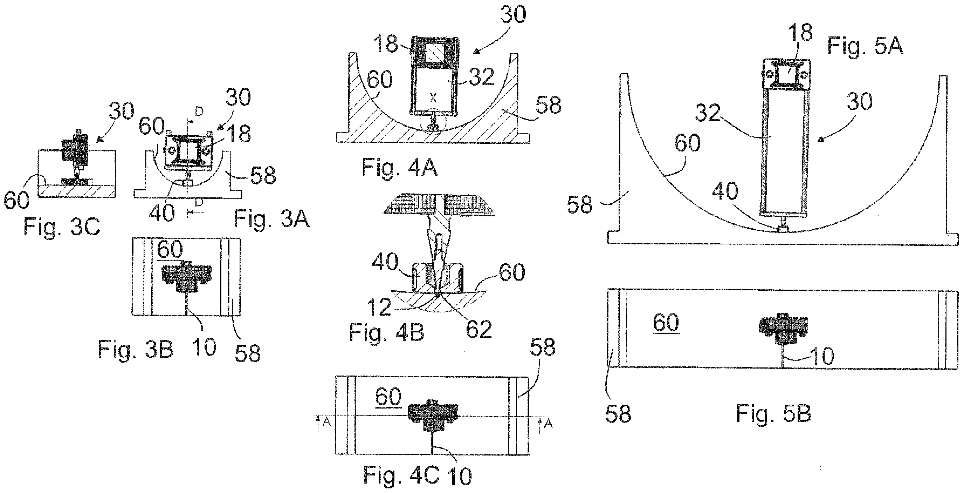

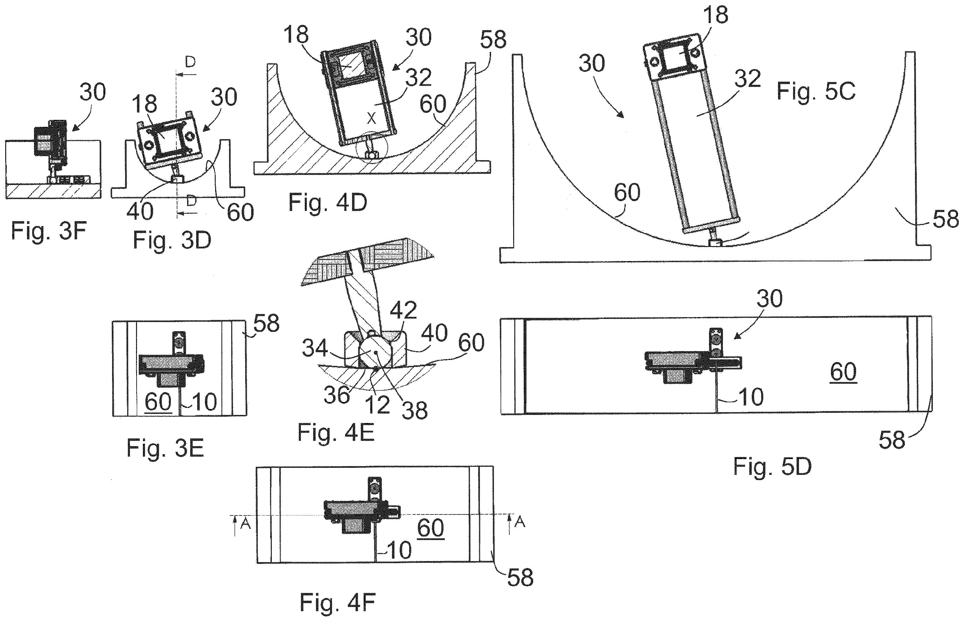

Bei der Vorrichtung 30 zum Ermitteln des Abstands eines Lichtstrahls 10 von einem Punkt auf einer Körperoberfläche nach den Fig. 3A bis 3F, die in einer Situation veranschaulicht sind, in welcher sie sich zwecks Abstandsermittlung und Krümmungsmittellinien-Ausrichtung in einem Turbinenlager 58 befinden, ist zusätzlich zu einem Abstandhalter 32 auch eine Halteeinrichtung 40 zum ortsfesten Halten des Abstandshalters 32 an der Körperoberfläche in Form der Lagerfläche 60 durch Magnetkraft vorgesehen. Die Fig. 3D bis 3F unterscheiden sich von den Fig. 3A bis 3C, welche die Vorrichtungen 30 jeweils in Vorderansicht, Seitenansicht und Draufsicht veranschaulichen, lediglich dadurch, dass eine gegenüber der Scherkraftrichtung geneigte Ausrichtung gewählt wurde, zeigen aber ansonsten ein und dasselbe Ausführungsbeispiel. Entsprechendes gilt auch für das Ausführungsbeispiel der Vorrichtung nach den Fig. 5A bis 5D, welche sich von der Vorrichtung 30 nach den Fig. 4A bis 4F insbesondere durch ihre größeren Abmessungen unterscheidet, um für eine größere Lagerfläche 60 eingesetzt werden zu können.

Die Vorrichtung 30 nach den Fig. 4A bis 4C unterscheidet sich von der Vorrichtung 30 nach den Fig. 4D bis 4E insbesondere dadurch, dass anstelle einer Kugel 34 eine sich verjüngende Spitze 62 (vgl. insbesondere die Detaildarstellung nach Fig. 4B) zur Herstellung eines Kontakts mit dem jeweiligen Punkt 12 auf der Lagerfläche 60 vorgesehen ist, so dass der Punkt auf der Lagerfläche 60 mit dem als Drehpunkt dienenden Schnittpunkt von windschiefer zweiter Schwenkachse 20 und erster Schwenkachse 22 (vgl. Fig. 1A und 1B) zusammenfällt oder nahezu zusammenfällt.

Bei der Vorrichtung 30 nach den Fig. 4D bis 4E ist an einem Ende des Abstandshalters 32 eine Kugel 34 angebracht (vgl. insbesondere Detaildarstellung nach Fig. 4E), die zur Herstellung eines Kontakts mit dem Punkt 12 auf der Lagerfläche 60 über die Kugelfläche 36 der Kugel 34 vorgesehen ist. Das Messfeld 18 ist hierbei unter Beibehaltung des Kontakts der Kugel 34 mit dem Punkt 12 auf der Lagerfläche 60 um das mit dem Schnittpunkt 24 (vgl. Fig. 1A und 1B) zusammenfallende Zentrum 38 der Kugel 34 verschwenkbar. Die Kugel 34 ist drehbar in einer Aufnahme 42 einer Halteeinrichtung 40 aufgenommen.

### Bezugszeichenliste

- 10: Lichtstrahl
- 12: Punkt
- 14: Körperoberfläche
- 16: Lichtsensor
- 18: ebenes Messfeld
- 20: zweite Schwenkachse
- 22: erste Schwenkachse
- 24: gemeinsamer Schnittpunkt
- 26: Lichtfleck
- 28: Kreisbogen
- 30: Vorrichtung
- 31: Längsachse
- 32: Abstandshalter
- 34: Kugel
- 36: Kugelfläche
- 38: Kugelzentrum
- 40: Halteeinrichtung
- 42: Aufnahme
- 44: Schwerkraftrichtung
- 47: Lagerfläche
- 48: Turbinenlager
- 50: Lagerfläche
- 52: Turbinenlager
- 54: Lagerfläche
- 56: Krümmungsmittelachse
- 58: Turbinenlager
- 60: Lagerfläche
- 62: Spitze
- 64: Ellipsenfit

## Patentansprüche

1. Verfahren zum Ermitteln des Abstands eines Lichtstrahls (10) von einem Punkt (12) auf einer Körperoberfläche (14) mittels eines Lichtsensors (16) mit einem ebenen Messfeld (18), umfassend die folgenden Schritte:
(A) Positionieren des Messfelds (18) derart, dass der Lichtstrahl (10) auf das Messfeld (18) auftrifft,
(B) Verschwenken des Messfelds (18) um eine erste Schwenkachse (22), die parallel zum Lichtstrahl (10) verläuft und von diesem beabstandet ist, und Verschwenken des Messfelds um wenigstens eine zweite Schwenkachse (20) während das Messfeld um die erste Schwenkachse (22) verschwenkt wird, wobei die zweite Schwenkachse (20) windschief zu dem Lichtstrahl (10) verläuft, wobei das Messfeld (18) bei dem Verschwenken um einen gemeinsamen Schnittpunkt (24) der zweiten Schwenkachse (20) und der ersten Schwenkachse (22) verschwenkt wird, der eine vordefinierte relative Lage zu dem Punkt (12) auf der Körperoberfläche (14) aufweist, und wobei bei dem Verschwenken um die zweite Schwenkachse (20) eine Schwenkstellung wenigstens dreimal durchlaufen wird, in welcher der Lichtstrahl (10) rechtwinkelig zu dem Messfeld (18) orientiert ist,
(C) Erfassen der Lagen des Lichtflecks (26) des Lichtstrahls (10) auf dem Messfeld (18) durch den Lichtsensor (16), welche der Lichtfleck (26) während des Verschwenkens gemäß Schritt B auf dem Messfeld (18) einnimmt,
(D) Ermitteln derjenigen Lagen von den in Schritt C erfassten Lagen, welche auf dem Messfeld (18) einen Kreisbogen (28) mit einem Abstand zu dem Schnittpunkt (24) beschreiben, der kleiner ist als der Abstand der übrigen in Schritt (C) erfassten Lagen zu dem Schnittpunkt (24), und
(E) Bestimmen des Abstands des Lichtstrahls (10) von dem Punkt (12) auf der Körperoberfläche (14) auf der Grundlage des Verlaufs des Kreisbogens (28) gemäß Schritt D und der vordefinierten relativen Lage zu dem Punkt (12) auf der Körperoberfläche (14).

2. Vorrichtung (30) zum Ermitteln des Abstands eines Lichtstrahls (10) von einem Punkt (12) auf einer Körperoberfläche (14), mit einem Lichtsensor (16), der ein ebenes Messfeld (18) aufweist, wobei der Lichtsensor (16) dazu eingerichtet ist, die Lage eines Lichtflecks (26) des auf das Messfeld (18) auftreffenden Lichtstrahls (10) auf dem Messfeld (18) zu erfassen, wobei das Messfeld (18) um einen gemeinsamen Schnittpunkt (24) einer ersten Schwenkachse (22) und wenigstens einer zweiten Schwenkache (20) verschwenkbar ist, so dass das Messfeld (18) während des Verschwenkens um die erste Schwenkachse (22) auch um die zweite Schwenkachse (20) verschwenkbar ist, wobei die erste Schwenkachse (22) parallel zum Lichtstrahl (10) verläuft und von diesem beabstandet ist, und wobei die zweite Schwenkachse (20) eine zu dem Lichtstrahl (10) windschiefe Schwenkachse (20) ist, wobei der Schnittpunkt (24) eine vordefinierte relative Lage zu dem Punkt (12) auf der Körperoberfläche (14) aufweist, und wobei das Messfeld (18) derart um die zweite Schwenkachse (20) verschwenkbar ist, dass eine rechtwinkelige Schwenkstellung durchlaufen werden kann, in welcher der Lichtstrahl (10) rechtwinkelig zu dem Messfeld (18) orientiert ist, **dadurch gekennzeichnet, dass** die Vorrichtung (30) dazu eingerichtet ist, bei Verschwenken des Meßfeldes (18) um die erste Schwenkachse (22) und die zweite Schwenkachse (20) von den erfassten Lagen diejenigen Lagen automatisch zu ermitteln, welche auf dem Messfeld (18) einen Kreisbogen (28) mit einem Abstand zu dem Schnittpunkt (24) beschreiben, der kleiner ist als der Abstand der übrigen erfassten Lagen zu dem Schnittpunkt (24), wobei die Vorrichtung (30) ferner dazu eingerichtet ist, den Abstand des Lichtstrahls (10) von dem Punkt (12) auf der Körperoberfläche (14) auf der Grundlage des Verlaufs des Kreisbogens (28) und der vordefinierten relativen Lage des Schnittpunkts (24) zu dem Punkt (12) auf der Körperoberfläche (14) automatisch zu bestimmen.

3. Vorrichtung (30) nach Anspruch 2, **dadurch gekennzeichnet, dass** das Messfeld (18) an einem Abstandshalter (32) der Vorrichtung (30) angebracht ist, der dafür vorgesehen ist, das Messfeld (18) von dem Punkt (12) auf der Körperoberfläche (14) zu beabstanden.

4. Vorrichtung (30) nach Anspruch 3, **dadurch gekennzeichnet, dass** an einem Ende des Abstandshalters (32) eine Kugel (34) angebracht ist, die zur Herstellung eines Kontakts mit dem Punkt (12) auf der Körperoberfläche (14) über die Kugelfläche (36) der Kugel (34) vorgesehen ist, und wobei das Messfeld (18) unter Beibehaltung des Kontakts der Kugel (34) mit dem Punkt (12) auf der Körperoberfläche (14) um das mit dem Schnittpunkt (24) zusammenfallende Zentrum (38) der Kugel (34) verschwenkbar ist.

5. Vorrichtung (30) nach Anspruch 3 oder 4, **dadurch gekennzeichnet, dass** die Vorrichtung (30) eine Halteeinrichtung (40) zum ortsfesten Halten des Abstandshalters (32) an der Körperoberfläche (14) aufweist.

6. Vorrichtung (30) nach Anspruch 5, **dadurch gekennzeichnet, dass** die Halteeinrichtung (40) zum Halten derselben an einem wenigstens bereichsweise magnetisch ausgebildeten Oberflächenbereich der Körperoberfläche (14) wenigstens bereichsweise magnetisch ausgebildet ist.

7. Vorrichtung (30) nach Anspruch 5 oder 6 und Anspruch 4, **dadurch gekennzeichnet, dass** die Kugel (34) drehbar in einer Aufnahme (42) der Halteeinrichtung (40) aufgenommen ist.

8. Vorrichtung (30) nach einem der Ansprüche 2 bis 7, **dadurch gekennzeichnet, dass** die Vorrichtung (30) ein Inklinometer zum zusätzlichen Bestimmen der Neigung des Abstands relativ zur Schwerkraftrichtung (44) aufweist.

## Claims

1. Method for establishing the distance of a light beam (10) from a point (12) on a body surface (14) by means of a light sensor (16) with a plane measurement field (18), comprising the following steps:
(A) positioning the measurement field (18) in such a way that the light beam (10) strikes the measurement field (18),
(B) pivoting the measurement field (18) about a first pivot axis (22) that extends parallel to the light beam (10) and that is spaced apart from the latter and pivoting the measurement field about at least one second pivot axis (20) while the measurement field is pivoted about the first pivot axis (22), wherein the second pivot axis (20) extends skew in relation to the light beam (10), wherein the measurement field (18) is pivoted during the pivoting about a common point of intersection (24) of the second pivot axis (20) and the first pivot axis (22), said common point of intersection having a predefined relative position in relation to the point (12) on the body surface (14), and wherein a pivot position in which the light beam (10) is oriented at right angles to the measurement field (18) is passed through at least three times when pivoting about the second pivot axis (20),
(C) capturing the positions of the light spot (26) of the light beam (10) on the measurement field (18) by the light sensor (16), the positions being adopted by the light spot (26) on the measurement field (18) during the pivoting according to step B,
(D) establishing those positions of the positions captured in step C which describe a circular arc (28) with a distance from the point of intersection (24) on the measurement field (18), said distance being smaller than the distance of the remaining positions, captured in step (C), in relation to the point of intersection (24), and
(E) determining the distance of the light beam (10) from the point (12) on the body surface (14) on the basis of the extent of the circular arc (28) according to step D and the predefined relative position in relation to the point (12) on the body surface (14).

2. Apparatus (30) for establishing the distance of a light beam (10) from a point (12) on a body surface (14), having a light sensor (16) that has a plane measurement field (18), wherein the light sensor (16) is configured to capture the position of a light spot (26) of the light beam (10) striking the measurement field (18) on the measurement field (18), wherein the measurement field (18) is pivotable about a common point of intersection (24) of a first pivot axis (22) and at least one second pivot axis (20) such that the measurement field (18) is also pivotable about the second pivot axis (20) during the pivoting about the first pivot axis (22), wherein the first pivot axis (22) extends parallel to the light beam (10) and is at a distance therefrom, and wherein the second pivot axis (20) is a pivot axis (20) that is skew to the light beam (10), wherein the point of intersection (24) has a predefined relative position in relation to the point (12) on the body surface (14) and wherein the measurement field (18) is pivotable about the second pivot axis (20) in such a way that a right-angled pivot position can be passed through, in which the light beam (10) is oriented at right angles to the measurement field (18), **characterized in that**, when pivoting the measurement field (18) about the first pivot axis (22) and the second pivot axis (20), the apparatus (30) is configured to automatically establish those positions from the captured positions which describe a circular arc (28) with a distance from the point of intersection (24) on the measurement field (18), said distance being smaller than the distance of the remaining captured positions from the point of intersection (24), wherein the apparatus (30) is further configured to automatically determine the distance of the light beam (10) from the point (12) on the body surface (14) on the basis of the extent of the circular arc (28) and the predefined relative position of the point of intersection (24) in relation to the point (12) on the body surface (14).

3. Apparatus (30) according to Claim 2, **characterized in that** the measurement field (18) is attached to a spacer (32) of the apparatus (30), said spacer being provided to space the measurement field (18) apart from the point (12) on the body surface (14).

4. Apparatus (30) according to Claim 3, **characterized in that** a ball (34) is attached to one end of the spacer (32), said ball being provided to establish contact with the point (12) on the body surface (14) by way of the ball surface (36) of the ball (34), and wherein the measurement field (18) is pivotable about the centre (38) of the ball (34), which coincides with the point of intersection (24), while maintaining contact between the ball (34) and the point (12) on the body surface (14).

5. Apparatus (30) according to Claim 3 or 4, **characterized in that** the apparatus (30) has a holding device (40) for holding the spacer (32) at the body surface (14) in stationary fashion.

6. Apparatus (30) according to Claim 5, **characterized in that** the holding device (40) for holding same at a surface region of the body surface (14), which has a magnetic embodiment at least in regions, is embodied to be magnetic, at least in regions.

7. Apparatus (30) according to Claim 5 or 6 and Claim 4, **characterized in that** the ball (34) is received in rotatable fashion in a receptacle (42) of the holding device (40).

8. Apparatus (30) according to any one of Claims 2 to 7, **characterized in that** the apparatus (30) has an inclinometer for additionally determining the inclination of the distance relative to the gravitational direction (44).

## Revendications

1. Procédé pour déterminer la distance d'un faisceau lumineux (10) à partir d'un point (12) sur une surface du corps (14) au moyen d'un capteur de lumière (16) comportant un champ de mesure plan (18), comprenant les étapes suivantes :
(A) positionnement du champ de mesure (18) de sorte que le faisceau lumineux (10) frappe le champ de mesure (18),
(B) pivotement du champ de mesure (18) autour d'un premier axe de pivotement (22) qui s'étend parallèlement au faisceau lumineux (10) et est espacé de celui-ci, et pivotement du champ de mesure autour d'au moins un second axe de pivotement (20) pendant que le champ de mesure est pivoté autour du premier axe de pivotement (22), dans lequel le second axe de pivotement (20) est incliné par rapport au faisceau lumineux (10), dans lequel le champ de mesure (18), pendant le pivotement, est pivoté autour d'une intersection commune (24) du second axe de pivotement (20) et du premier axe de pivotement (22), laquelle présente une position relative prédéfinie par rapport au point (12) sur la surface du corps (14) et dans lequel, au cours du pivotement autour du second axe de pivotement (20), une position de pivotement est traversée au moins trois fois, dans laquelle le faisceau lumineux (10) est orienté perpendiculairement au champ de mesure (18),
(C) détection, par le capteur de lumière (16), des positions du point lumineux (26) du faisceau lumineux (10) sur le champ de mesure (18) que le point lumineux (26) occupe sur le champ de mesure (18) pendant le pivotement selon l'étape B,
(D) détermination des positions, parmi les positions détectées à l'étape C, qui, sur le champ de mesure (18), décrivent un arc de cercle (28) à une distance de l'intersection (24) inférieure à la distance des autres positions détectées à l'étape (C) par rapport à l'intersection (24), et
(E) détermination de la distance du faisceau lumineux (10) par rapport au point (12) sur la surface du corps (14) en fonction du parcours de l'arc de cercle (28) conformément à l'étape D et de la position relative prédéfinie par rapport au point (12) sur la surface du corps (14).

2. Dispositif (30) pour déterminer la distance d'un faisceau lumineux (10) à partir d'un point (12) sur une surface du corps (14) comprenant un capteur de lumière (16) qui présente un champ de mesure plan (18), dans lequel le capteur de lumière (16) est configuré pour détecter la position sur le champ de mesure (18) d'un point lumineux (26) du faisceau lumineux (10) incident sur le champ de mesure (18), dans lequel le champ de mesure (18) peut être pivoté autour d'une intersection commune (24) d'un premier axe de pivotement (22) et d'au moins un second axe de pivotement (20), de sorte que le champ de mesure (18) puisse également être pivoté autour du second axe de pivotement (20) lors du pivotement autour du premier axe de pivotement (22), dans lequel le premier axe de pivotement (22) est parallèle au faisceau lumineux (10) et espacé par rapport à celui-ci, et dans lequel le second axe de pivotement (20) est un axe de pivotement (20) incliné par rapport au faisceau lumineux (10), l'intersection (24) ayant une position relative prédéfinie par rapport au point (12) sur la surface du corps (14), et dans lequel le champ de mesure (18) peut être pivoté autour du second axe de pivotement (20) de sorte qu'une position de pivotement à angle droit puisse être traversée, dans laquelle le faisceau lumineux (10) est orienté perpendiculairement au champ de mesure (18), **caractérisé en ce que** le dispositif (30) est configuré pour déterminer automatiquement ces positions à partir des positions détectées lorsque le champ de mesure (18) pivote autour du premier axe de pivotement (22) et du second axe de pivotement (20), lequelles, sur le champ de mesure (18), décrivent un arc de cercle (28) à une distance de l'intersection (24) inférieure à la distance des autres positions détectées par rapport à l'intersection (24), le dispositif (30) étant en outre configuré pour déterminer automatiquement la distance du faisceau lumineux (10) par rapport au point (12) sur la surface du corps (14) en fonction du parcours de l'arc de cercle (28) et de la position relative prédéfinie de l'intersection (24) par rapport au point (12) sur la surface du corps (14).

3. Dispositif (30) selon la revendication 2, **caractérisé en ce que** le champ de mesure (18) est fixé à une entretoise (32) du dispositif (30) destinée à espacer le champ de mesure (18) du point (12) situé sur la surface du corps (14).

4. Dispositif (30) selon la revendication 3, **caractérisé en ce qu'**une bille (34) est montée à une extrémité de l'entretoise (32) et est destinée à entrer en contact avec le point (12) sur la surface du corps (14) par la surface sphérique (36) de la bille (34), et dans lequel le champ de mesure (18), tout en maintenant le contact de la bille (34) avec le point (12) sur la surface du corps (14), peut être pivoté autour du centre (38) de la bille (34) coïncidant avec le point d'intersection (24).

5. Dispositif (30) selon la revendication 3 ou 4, **caractérisé en ce que** le dispositif (30) comporte un dispositif de retenue (40) destiné à maintenir fermement l'entretoise (32) sur la surface du corps (14) .

6. Dispositif (30) selon la revendication 5, **caractérisé en ce que** le dispositif de retenue (40) est réalisé au moins partiellement de façon magnétique pour le maintien du dispositif au niveau d'une zone superficielle de la surface du corps (14) réalisée au moins partiellement de façon magnétique.

7. Dispositif (30) selon la revendication 5 ou 6, et la revendication 4, **caractérisé en ce que** la bille (34) est reçue en rotation dans un réceptacle (42) du dispositif de retenue (40).

8. Dispositif (30) selon une des revendications 2 à 7, **caractérisé en ce que** le dispositif (30) comporte un inclinomètre pour déterminer en outre l'inclinaison de la distance par rapport à la direction de la force de gravité (44).
